# EUROPÄISCHE PATENTSCHRIFT

(11) **EP 1 123 497 B1**
(45) Veröffentlichungstag und Bekanntmachung des Hinweises auf die Patenterteilung: **09.07.2003**
(21) Anmeldenummer: 99952525.6
(22) Anmeldetag: 06.10.1999
(51) Int. Cl.: G01N 11/08, G01N 33/44

(54) **VORRICHTUNG UND VERFAHREN ZUM MESSEN DER VISKOSITÄT PLASTISCHER MASSEN**
DEVICE AND METHOD FOR MEASURING THE VISCOSITY OF PLASTIC MATERIALS
DISPOSITIF ET PROCEDE POUR MESURER LA VISCOSITE DE MATIERES PLASTIQUES

(30) Priorität: 09.10.1998 DE 19846579
(43) Veröffentlichungstag der Anmeldung: 16.08.2001
(73) Patentinhaber: Dr. Collin GmbH, 85560 Ebersberg (DE)
(72) Erfinder: Collin, Heinrich, Dr.-Ing., 85558 Baldham (DE); Collin, Heiner, Dipl.-Ing., 81735 München (DE)
(74) Vertreter: Fleuchaus, Leo, Dipl.-Ing.
(86) Internationale Anmeldenummer: EP9907477
(87) Internationale Veröffentlichungsnummer: WO00022410

(56) Entgegenhaltungen:
- FR-A- 2 686 695
- GB-A- 2 271 856
- US-A- 4 425 790
- US-A- 4 677 844
- GINAYATULLIN ET AL: "a multichannel capillary viscometer" INDUSTRIAL LABORATORY, Bd. 40, Nr. 10, Oktober 1974 (1974-10), Seiten 1467-1468, XP002127908 new-york (US) in der Anmeldung erwähnt

## Beschreibung

Die Erfindung betrifft eine Vorrichtung nach dem Oberbegriff des Anspruches 1 und ein Meßverfahren zur Bestimmung der Fließkurve eines plastischen Materials nach dem Oberbegriff des Anspruchs 11.

Eine derartige Vorrichtung und ein solches Verfahren sind zum Beispiel aus der DE 42 20 157 A1 bekannt.

Die Qualitätskontrolle bei der Produktion von Polymeren umfaßt eine Reihe von Prüfungen unterschiedlicher Eigenschaften, wie z.B. die rheologischen Eigenschaften, die Bestimmung von Fremdpartikeln in der Schmelze, oder die Bestimmung der chemischen Zusammensetzung bzw. der Additive in einem Polymer.

Hat man früher die Messung dieser verschiedenen Eigenschaften in getrennten Meßgeräten und - verfahren durchgeführt, so ist man heute immer mehr bestrebt, eine Vielzahl von Eigenschaften in einem Prüfgerät oder -verfahren zu bestimmen.

So haben sich heute Labor-Extrusionsanlagen etabliert, in welchen gleichzeitig bzw. hintereinander
- ein Polymer aufgeschmolzen wird;
- an dem Polymer kontinuierlich rheologische Eigenschaften, die Viskosität, der Schmelzfließindex (MFI) oder der Volumenfließindex (MVI) ermittelt werden;
- eine Folie erzeugt wird, an welcher kontinuierlich optische Bestimmungen der Fremdkörper, wie Gels, Stippen, black specs usw. durchgeführt werden;
- oder die Folie weiter verwendet wird, um kontinuierlich mit Hilfe der Infrarotspektroskopie den Anteil bestimmter Additive zu bestimmen.

Die Bestimmung der Viskosität ist also eine Teilaufgabe, welche optimal in den Gesamtprozeß einer Labor-Extrusionsanlage eingebunden werden muß.

Zu unterscheiden ist bei kontinuierlich arbeitenden sogenannten Online-Rheometern einerseits zwischen den sogenannten Seitenstromrheometern, welche durch einen Seitenstrom aus dem Extruder gespeist werden und das aus der Kapillare austretende Material auf den Boden ablaufen lassen; und andererseits den sogenannten Inline-Rheometern, welche im Hauptstrom der Schmelze zwischen Schnecke und Düse angeordnet sind und bei welchen die Schmelze nach dem Durchlauf durch das Rheometer in den Hauptstrom rückgeführt wird, sodann aus der Düse austritt und weiterverarbeitet wird.

Nach dem Stand der Technik wird die Viskosität einer plastischen Masse, z. B. mit Hilfe der Messung des Druckverlustes beim Fließen durch eine Kapillare definierter Abmessung und Länge bestimmt.

Voraussetzungen für die Bestimmung der Viskosität sind dabei:
- die Kenntnis der genauen Durchflußmenge pro Zeiteinheit; diese wird bei der Prüfung von Polymerschmelzen vorzugsweise definiert durch Verwendung einer Zahnradpumpe, welche mit definierter Geschwindigkeit angetrieben wird und damit eine gleichbleibende Durchflußmenge an plastischer Masse garantiert;
- die Kenntnis der Geometrie der Meßkapillare;
   bei Verwendung einer Schlitzkapillare sind Breite und Höhe sowie die Länge bekannt; bei Verwendung einer Rundkapillare sind Durchmesser und Länge bekannt;
- die Einstellung einer genauen Temperatur der Schmelze und der Umgebung der Meßkapillaren;
- die Kenntnis des spezifischen Gewichtes der zu messenden Substanz;
- die Messung der Druckdifferenz zwischen Eingang und Ausgang einer runden Meßkapillare, bzw. die Druckdifferenz zwischen zwei Punkten einer Schlitzkapillare.

Mit dieser Messung gelingt unter Anwendung bekannter Rechenansätze die Berechnung eines Meßpunktes der Viskosität bei einer definierten Schergeschwindigkeit. Ein großes Problem bei Polymerschmelzen ist aber das nicht-Newtonsche oder strukturviskose Verhalten, d. h. bei verschiedenen Schergeschwindigkeiten ergeben sich also verschiedene Viskositätswerte.

Für die Bestimmung des Verhaltens von Schmelzen in den verschiedensten Verfahren der Kunststoffverarbeitung sind nun sehr unterschiedliche Schergeschwindigkeiten abzudecken, nämlich im Bereich von ca. 1 : 10⁴.

Mit einer Kapillare und einer Schmelzepumpe können normalerweise Bereiche von 1:10 und maximal Bereiche von 1:100 der Schergeschwindigkeit abgedeckt werden; dies allerdings nur durch Variation der Drehzahl der Schmelzepumpe in einem sehr weiten Bereich.

Daher werden seit längerem Mehrfachanordnungen von Kapillaren verwendet, um den Bereich der zu messenden Schergeschwindigkeit zu erhöhen.

In der bekannten Ausführung gemäß DE 42 20 157 A1 werden z. B. Schlitzkapillaren mit stufenweise sich verringernden Höhen eingesetzt; hierbei ist der Bereich der zu messenden Schergeschwindigkeit um ca. eine Zehnerpotenz vergrößert. Um weite Bereiche der Schergeschwindigkeit abzudecken, muß zusätzlich die Drehzahl der Schmelzepumpe in erheblichem Maße variiert werden. Beim Einsatz als Inline-Meßgerät ist die Verweilzeit in den relativ langen Düsen erheblich und kann eventuell das Material schädigen.

Die DE 42 36 407 C2 offenbart eine Vorrichtung zum Messen der Viskosität plastischer Massen, insbesondere von Polymerschmelzen, nach dem Prinzip der Bestimmung des Druckabfalles beim Fließen der Masse durch eine Kapillare mit definiertem Querschnitt und definierter Länge zum Einsatz im Labor, wie vor allem auch für kontinuierliche Messungen im Betrieb, insbesondere bei der integrierten Qualitätskontrolle. Dabei ist eine regelbare Schmelzepumpe zur Erzeugung eines definierten Schmelzestromes in eine beheizbare Vorrichtung eingebaut, und zur Erfassung eines größeren Bereiches von Fließgeschwindigkeiten sind mehrere Kapillaren in die Vorrichtung eingebaut.

Aus Ind. Lab. (1974), 40, S. 1467 - 1468 ist ein Vierkanalviskosimeter bekannt, bei dem vier jeweils austauschbare Kapillaren gleichzeitig mit Schmelze befüllt werden können. Die Massenströme in den Kapillaren wirken auf Metallstreifen ein. Die Verformung der Metallstreifen wird in allen vier Kapillarengleichzeitig erfaßt und ausgewertet.

In einer weiteren bekannten Vorrichtung gemäß der GB-A-2 271 856 werden mehrere Rundkapillaren verschiebbar angeordnet, so daß sie nacheinander von einer Schmelzepumpe mit Schmelze versorgt werden; nachteilig ist hierbei das Problem der gleichmäßigen Beheizung der verschiebbaren Kapillaren; vor allem aber ist der Einsatz nur eines Massedruckfühlers für den gesamten zu messenden Druckbereich problematisch, denn dadurch ist die Meßgenauigkeit in sehr niedrigen Druckbereichen bei großen Querschnitten der Kapillare und sehr niedrigen Schergeschwindigkeiten ungenügend.

Aus der US-4,677,844 ist zudem eine Vorrichtung bekannt, die zum Messen der Viskosität plastischer Massen nach dem Prinzip der Bestimmung des Druckabfalles beim Fließen der Masse durch eine Kapillare mit definiertem Querschnitt und definierter Länge dient, wobei vier Kapillaren mit einem Zylinder verbunden sind, und diese Kapillaren nacheinander durch Betätigen eines Schaltmechanismus mit der Umgebungsatmosphäre verbunden werden. Wird ein Kolben betätigt, so wird die in dem Zylinder enthaltene Masse durch eine ausgewählt Kapillare gepreßt. Diese Messung wird für eine jede der Kapillaren wiederholt.

Nach einer anderen Ausführung werden mehrere Kapillaren durch mehrere Schmelzeströme einer Mehrfachzahnradpumpe jeweils mit Schmelze beschickt; dies ist also die Mehrfachanordnung einer einzelnen Schmelzepumpe mit je einer zugehörigen Kapillare.

Eine solche Vorrichtung ist z.B. aus der US-PS 44 25 790 bekannt. Dort sind zur Bestimmung der Extrusionseigenschaften von thermoplastischen Polymermaterialien drei oder vier Kapillaren nebeneinanderliegend in Reihe angeordnet. Von einer Kapillare zur jeweils nächsten Kapillare steigt die Größe der Durchlaßöffnungen der Kapillaren an, wobei das Verhältnis der Kapillarlänge zum Kapillarquerschnitt für alle Kapillaren im wesentlichen gleich ist. Mittels einer Druckpumpe wird eine erhitzte Polymerschmelze mit konstanter Volumenstromrate durch die Kapillaren gepreßt und mittels Sensoren werden Druck und Temperatur in einer jeden Kapillare ermittelt. Somit ist es möglich die Polymerviskosität in einer jeden Kapillare für unterschiedliche Schergeschwindigkeiten zu bestimmen.

Hiermit können hohe Schergeschwindigkeitsbereiche in einem Gerät gemessen werden; allerdings ist der Verbrauch an Schmelze zwei- oder dreimal so hoch, was sowohl höhere Kosten an Neumaterial wie in der Regranulierung verursacht. Dagegen muß insbesondere in der kontinuierlichen Qualitätskontrolle das Bestreben sein, die Menge an zu verwerfendem Testmaterial zu minimieren.

Bei anderen bekannten Systemen, wie sie z.B. in der DE 44 42 172 C2, Fig. 2 offenbart sind, wird die Schmelze nach dem Weg durch die Kapillare nicht verworfen, sondern wieder in den Schmelzestrom des Extruders zurückgeführt. Diese Methode vermeidet zwar einerseits Materialverluste, andererseits aber wird das Material beim Durchlaufen durch das Rheometer zeitlich und thermisch weit höher belastet; dies kann bei der folgenden optischen Kontrolle zu Fehlern führen, welche nicht im Ausgangsmaterial zu finden sind, und somit das Meßergebnis dieser nachfolgenden Untersuchung verfälschen. Auch aus der US-PS 53 47 852 ist eine solche Inline-Vorrichtung zur Bestimmung rheologischer Eigenschaften erhitzter Schmelzen bekannt. Durch eine erste Dosierpumpe wird dabei ein Schmelzenstrom von einem zu verarbeitenden Hauptstrom abgezweigt, und eine zweite Dosierpumpe preßt den abgezweigten Schmelzenstrom in den Hauptstrom zurück, nachdem er einen Kapillargang durchflossen hat, wo Druck und Temperatur des abgezweigten Schmelzenstroms ermittelt worden sind. Dabei sind die erste und die zweite Dosierpumpe unabhängig voneinander regelbar, so daß der Druck am Ende des Kapillargangs im wesentlichen konstant gehalten werden kann.

Die nach dem Stand der Technik bekannten Vorrichtungen haben also viele Nachteile, wie
- entweder geringer Bereich abzudeckender Schergeschwindigkeiten;
- oder geringe Meßgenauigkeit in bestimmten Bereichen;
- oder lange Verweilzeit mit der Gefahr der thermischen Schädigung;
- oder hoher Verbrauch an Schmelze und damit erhöhte Kosten;
- oder negative Einflüsse auf die optische Kontrolle bei Rückführung der Schmelze in den Hauptstrom.

Aufgabe der Erfindung ist es, eine Vorrichtung und ein dazugehöriges Meßverfahren zu schaffen, bei dem die oben genannten Nachteile vermieden werden.

Diese Aufgabe wird durch eine Vorrichtung und ein Verfahren gemäß den unabhängigen Ansprüchen 1 und 11 gelöst.

Die abhängigen Ansprüche betreffen vorteilhafte Ausführungsformen der vorliegenden Erfindung.

Erfindungsgemäß ist die Vorrichtung im wesentlichen aus einem mehrteiligen Rheometerkörper aufgebaut. Der Rheometerkörper ist allseitig beheizt zur Einhaltung einer genau definierten Schmelzetemperatur. Der Rheometerkörper besitzt einen Einlaufkanal an welchem das beheizte Zuführrohr für die Schmelzezufuhr angeflanscht ist. Die Schmelze wird üblicherweise in einem getrennten Extruder erzeugt, in welchem Sie durch Einbringen von Temperatur und Scherenergie plastifiziert und homogenisiert wird. Der Hauptstrom des Extruders wird durch eine geeignete Düse z.B. zu einer Folie ausgetragen, die nach Abkühlung zum Ermitteln optischer Qualitätsmerkmale des Polymers dient.

Die Schmelze wird dann durch einen Schmelzekanal als Seitenstrom der Zahnradpumpe zugeführt, welche ebenfalls im Rheometerkörper integriert ist. Die Schmelzepumpe wird durch das unter dem Vordruck aus dem Extruder stehende Material versorgt und drückt andererseits die Schmelze mit gleichbleibender Menge durch die Austrittsöffnung in den Schmelzeverteiler (Schmelzeweiche).

Hier wird der Schmelzestrom aufgeteilt in mehrere (2 bis n) Schmelzeströme, die zu einer Schmelzeweiche führen. Die Schmelzeweiche ist ein zylindrischer Körper, welcher mit enger Passung in den Rheometerkörper eingepaßt ist. Der Zylinder ist in geeigneter Weise durchbohrt, so daß nach einer Verdrehung oder Verschiebung um einen definierten Betrag ein nächster Kanal zur Beschickung der nächsten Kapillare mit Schmelze frei wird. Diese Schmelzeweiche wird so verstellt, daß jeweils nur ein Schmelzestrom zu einer der dahinter fest in den Rheometerkörper eingebauten Kapillaren durchgeleitet wird. Vor den Kapillaren ist je eine in den Abmessungen vergrößerte Druckmeßkammer angeordnet, welche einen problemlosen Einbau je eines zu einer Meßkapillare gehörenden Membrandruckfühlers erlaubt.

Nach Durchfließen durch die Kapillare tritt die Schmelze drucklos aus und wird in einem darunter angeordneten Gefäß abgekühlt und gesammelt.

Die einzelnen Meßkapillaren sind über je eine Spannschraube im Rheometerkörper befestigt und somit leicht austauschbar.

Das Meßverfahren läuft wie folgt ab:

Die Kapillaren werden so ausgewählt, daß einerseits ein sehr hoher Schergeschwindigkeitsbereich abgedeckt werden kann (ca. 1:1000), andererseits aber der Druckaufbau nicht die zulässigen Werte für die Funktion der Schmelzepumpe und des Druckaufnehmers überschreitet. Für jeden Meßbereich wird ein dafür optimal geeigneter Druckaufnehmer eingesetzt.

Die Pumpe wird auf eine definierte Drehzahl eingestellt, zur Erzeugung eines definierten Förderstromes. Die Schmelzeweiche wird in Durchflußposition zur ersten Kapillare gebracht. Nach definierter Spülzeit werden mehrere Messungen durchgeführt zur Ermittlung eines zuverlässigen Mittelwertes.

Nach definierter Zeit wird die Schmelzeweiche so verstellt, daß die nächste Kapillare angeströmt wird. Dieser Vorgang kann mit z.B. einer dritten Kapillare wiederholt werden. Die Messung bei konstantem Durchsatz der Schmelzepumpe ergibt in diesem Falle bereits drei Punkte einer Fließkurve im Schergeschwindigkeitsbereich von bis zu 1:1000 oder mehr. Dieses Meßergebnis ist für die meisten Einsatzfälle in der kontinuierlichen Qualitätskontrolle ausreichend.

Nach Ablauf einer Meßreihe wird automatisch ein Rechenvorgang zur Ermittlung der drei Meßpunkte einer Fließkurve ausgelöst; daraus wird z.B. über den Careau-Ansatz die gesamte Fließkurve errechnet und daraus ein genormter Wert der Fließfähigkeit, z.B. ein MFI-Wert, ermittelt. Damit steht in der Produktionskontrolle laufend ein korrigierter Viskositätswert in Kurvenform oder als Einzelwert zur Verfügung.

Falls im Laborbetrieb oder in der Entwicklung ein noch größerer Meßbereich oder eine genauere Bestimmung der Fließkurve gesucht wird, kann zusätzlich noch die Drehzahl der Schmelzepumpe verändert werden, wodurch ein Bereich der Schergeschwindigkeit von mehr als 10⁴ abgedeckt werden kann.

Die Vorteile der erfindungsgemäßen Vorrichtung sind somit:
- ein Abdecken eines weiten Bereiches der Schergeschwindigkeit von bis zu 1:1000 bereits bei konstanter Pumpendrehzahl und konstantem Schmelzestrom, und damit ohne Beeinflussung des Hauptstromes des Extruders;
- die saubere Ermittlung der Fließkurve bei Ermittlung von 3 verschiedenen Meßpunkten über den gesamten Schergeschwindigkeitsbereich, ohne daß Kapillaren von Hand ausgewechselt und geeicht werden müssen;
- die Abdeckung eines Bereiches der Schergeschwindigkeit von bis zu 1:10⁴ bei variabler Pumpendrehzahl, dabei können bei zusätzlicher Regelung der Pumpendrehzahl z.B. mit einer zweiten Pumpendrehzahl insgesamt sechs oder acht Punkte einer Fließkurve festgelegt werden;
- hohe Genauigkeit und Reproduzierbarkeit der Messung durch den Einsatz eines optimalen Druckmeßaufnehmers für jede Kapillare;
- geringer Verbrauch an Polymermaterial durch Beschickung einer Kapillare nach der anderen mit Hilfe der Schmelzeweiche; und
- vollautomatische Ermittlung einer Fließkurve und eines genormten Festwertes (z.B. MFI).

Die Vorteile und Merkmale der vorliegenden Erfindung ergeben sich auch aus der Beschreibung der nachfolgenden Ausführungsbeispiele im Zusammenhang mit den Ansprüchen und Zeichnungen.

Es zeigen:
- Fig. 1: eine Prinzipdarstellung einer Labor-Extrusionsanlage mit Seitenstromrheometer;
- Fig. 2: einen Querschnitt durch die erfindungsgemäße Vorrichtung;
- Fig. 3: einen Längsschnitt durch die erfindungsgemäße Vorrichtung;
- Fig. 4: einen Längsschnitt durch eine Schmelzeweiche mit drei Bohrungen;
- Fig. 5: einen Längsschnitt durch eine Schmelzeweiche mit vier Bohrungen;
- Fig. 6: einen Querschnitt durch eine erfindungsgemäßen Vorrichtung mit axial verschiebbarer Schmelzweiche; und
- Fig. 7: eine erfindungsgemäße Vorrichtung in Arbeitsposition (Normalbetriebslage) und in zwei Reinigungspositionen.

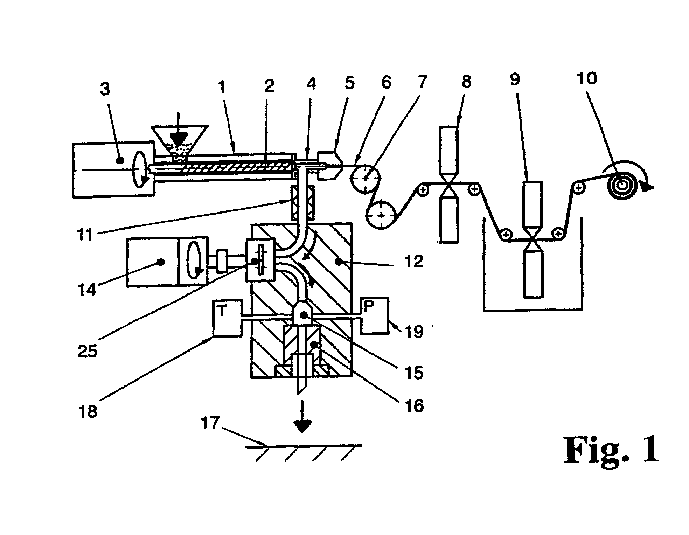

Fig. 1 zeigt beispielhaft die Prinzipdarstellung einer Laborextrusionsanlage, welche in der Qualitätskontrolle von Polymeren eingesetzt wird. Im beheizten Zylinder 1 des Extruders wird das Polymer aufgeschmolzen und durch die durch den Antrieb 3 bewirkte Drehbewegung der Schnecke 2 in den Adapter 4 gefördert und dann durch die Düse 5 z.B. zu einer Flachfolie 6 extrudiert (in ähnlicher Weise könnte statt der Flachfoliendüse eine Blasfoliendüse zur Erzeugung einer Blasfolie eingesetzt werden). Die Kühlwalzen 7 der Abzugseinrichtung kühlen die Folie ab und führen die Folie einer Prüfvorrichtung 8 (z.B. für optische Kontrolle auf Einschlüsse) und einer Prüfvorrichtung 9 (z.B. für die Prüfung der chemischen Zusammensetzung) zu. Abschließend wird die Folie im Wickler 10 aufgewickelt.

Aus dem Adapter 4 wird über das Schmelzerohr 11 ein Seitenstrom der Schmelze in den beheizten Rheometerkörper 12, und hier wieder in die Schmelzepumpe 25 gedrückt. Diese wird durch den Antrieb 14 regelbar angetrieben. Über eine Schmelzebohrung 15 wird die Schmelze durch die Kapillare 16 gepreßt von wo sie auf den Boden 17 frei abläuft. Dabei werden mittels Sensoren 18 bzw. 19 die Schmelzetemperatur sowie der Schmelzedruck vor der Kapillare gemessen.

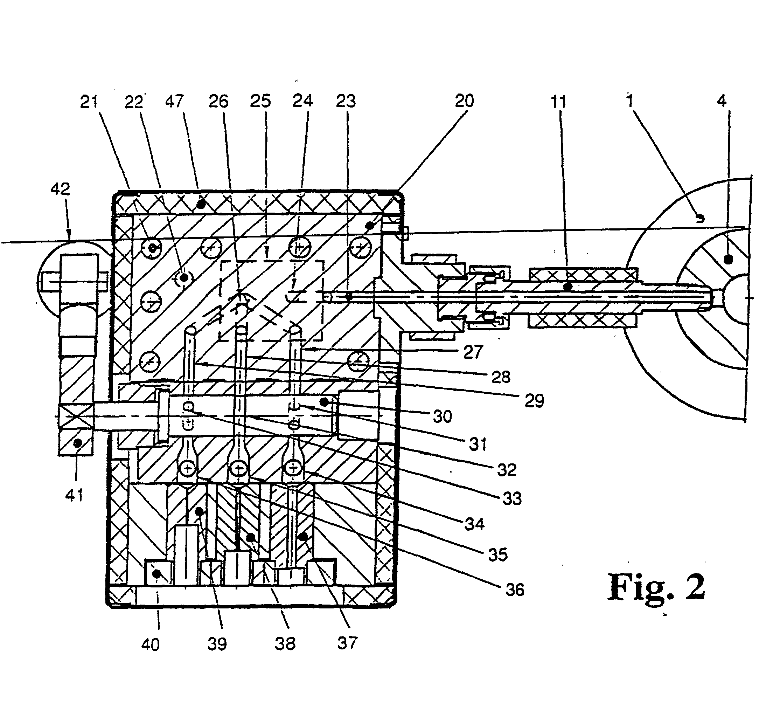

Fig. 2 zeigt einen Querschnitt durch die Schmelzezuführung und den Rheometerkörper der erfindungsgemäßen Vorrichtung für das Beispiel einer Vorrichtung mit drei Kapillaren. Aus dem Zylinder 1 bzw. dem Adapter 4 wird die Schmelze durch das beheizte Schmelzerohr 11 in den Rheometerkörper 20 gefördert.

Dieser Körper wird über Heizelemente 21 beheizt, die Temperatur wird über den Temperaturfühler 22 zur exakten Regelung der Temperatur gemessen. Die Wärmeisolierung 47 garantiert eine gleichmäßige Temperaturverteilung. Die Schmelze wird durch die Schmelzebohrung 23 durch den Körper bis in die Einlaufbohrung 24 der rückseitig an den Rheometerkörper angeflanschten Schmelzepumpe 25 geführt. Durch die Austrittsöffnung 26 tritt die Schmelze aus der Pumpe 25 aus und wird in diesem Beispiel auf drei Einzelförderströme aufgeteilt, entsprechend den Kanälen 27, 28 und 29.

Aus einem dieser Kanäle strömt die Schmelze durch eine der Querbohrungen 31, 32 oder 33 der Schmelzeweiche 30 weiter in eine der Druckkammern 34, 35 oder 36. Die Position der jeweils offenen Querbohrung in der Schmelzeweiche wird durch die Ratsche 41 mit Hilfe des Pneumatikzylinders 42 eingestellt.

Aus den Druckkammern strömt die Schmelze durch jeweils eine der Kapillaren 37, 38 oder 39 ins Freie und läuft drucklos ab. Nach Lösen des Druckstückes 40 können die Kapillaren ausgebaut werden.

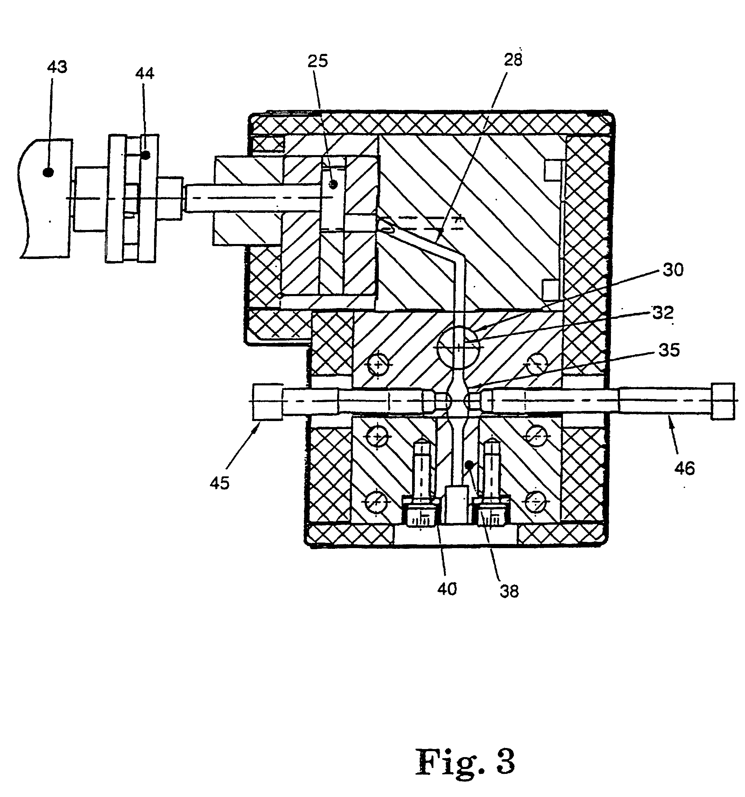

Fig. 3 zeigt einen Längsschnitt der erfindungsgemäßen Vorrichtung. Der Getriebemotor 43 treibt über eine Gelenkkupplung 44 die Schmelzepumpe 25 an. Der Schmelzestrom aus der Pumpe wird über den Kanal 28 zur Schmelzeweiche 30 geführt. Durch den Querkanal 32 fließt die Schmelze in die Druckkammer 35. In diesem Bereich wird der Massedruck über einen Sensor 45 und die Massetemperatur über einen Sensor 46 gemessen. Durch die Kapillare 38 strömt die Schmelze ohne Gegendruck ins Freie.

Der durch die Verwendung der Schmelzepumpe 25 wohldefinierte Wert für den Schmelzevolumenstrom und die durch die Sensoren 45 und 46 ermittelten Werte für den Massedruck und die Massetemperatur können über geeignete Meßwandler (nicht gezeigt) einem Rechner (nicht gezeigt) zugeführt werden, wo aus diesen Daten die gewünschten Fließkurven errechnet werden können.

In der in Fig. 2 und 3 gezeigten Ausführungsform ist der Schmelzeverteiler als rotationssymmetrische Schmelzeweiche ausgebildet und mit n (wobei n = 2, 3, 4, ...) Querkanälen für die Schmelzeführung ausgestattet. Dabei kann der Schmelzeverteiler durch eine Drehbewegung von einer einer der n Kapillaren zugeordneten Position in eine einer nächsten Kapillare zugeordnete Position gebracht werden.

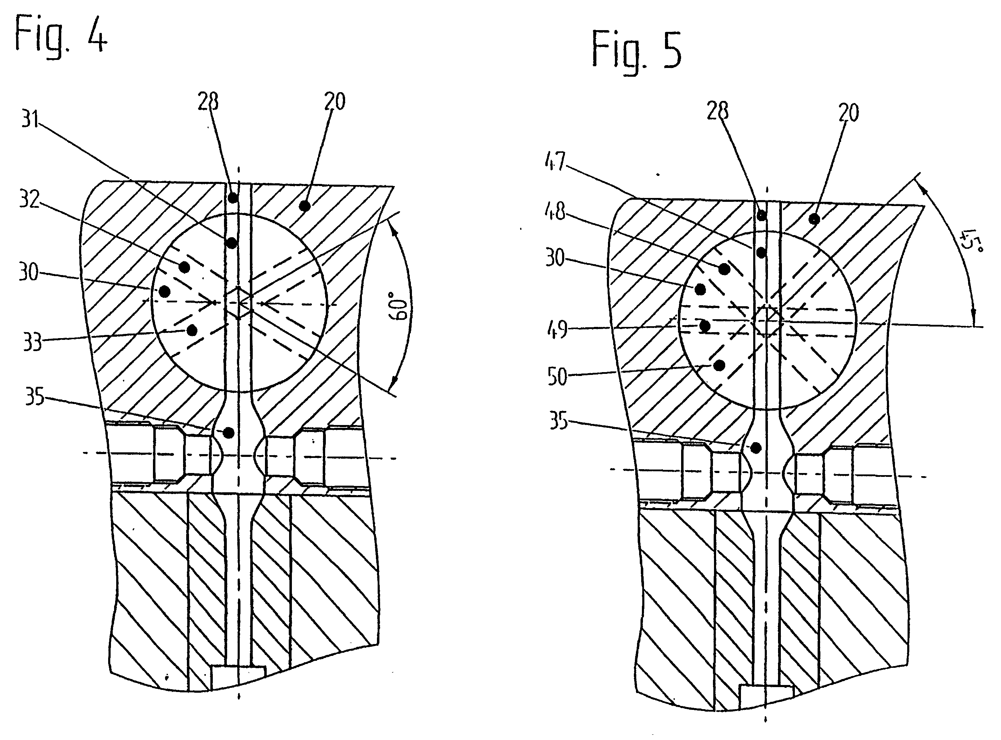

Vorzugsweise kann der Schmelzeverteiler mit drei radial zueinander angeordneten Querkanälen für die Schmelzeführung ausgestattet sein. Fig. 4 zeigt einen Ausschnitt aus Fig. 3. Die Bohrungen 31, 32 und 33 im Schmelzverteiler 30 sind dann jeweils um 60° in Drehrichtung zueinander versetzt und durch eine Drehbewegung des Schmelzeverteilers um eine Drehachse um 60° ist jeweils die nächste von insgesamt drei Kapillaren mit Schmelze beschickbar. Damit ist der Durchgang von der Zuführbohrung 28 zur Druckkammer 35 vor der Kapillare 38 jeweils nach drei Drehschritten wieder frei.

In einer weiteren Ausführungsform nach Fig. 5 ist der Schmelzeverteiler vorzugsweise mit vier radial zueinander angeordneten Querkanälen 47, 48, 49 und 50 für die Schmelzeführung ausgestattet und die Bohrungen sind jeweils um 45° in Drehrichtung versetzt, wobei durch eine Drehbewegung des Schmelzeverteilers um eine Drehachse um 45° jeweils die nächste von vier Kapillaren mit Schmelze beschickbar ist.

Der Antrieb der Drehbewegung des Schmelzeverteilers kann auch über einen Servomotor mit Schrittschaltung erfolgen, so daß die Drehbewegung jeweils in gleicher Richtung weitergeht.

Bei einer nochmals weiteren (nicht gezeigten) Ausführungsform sind zwei Kapillaren vorgesehen und die Drehbewegung zum Drehen des Schmelzeverteilers erfolgt jeweils mit Hilfe eines Hydraulik- oder Pneumatikzylinders oder eines elektrischen oder magnetischen Antriebs. Dabei ist der Schmelzeverteiler von einer in die andere Position hin- und wieder zurückdrehbar.

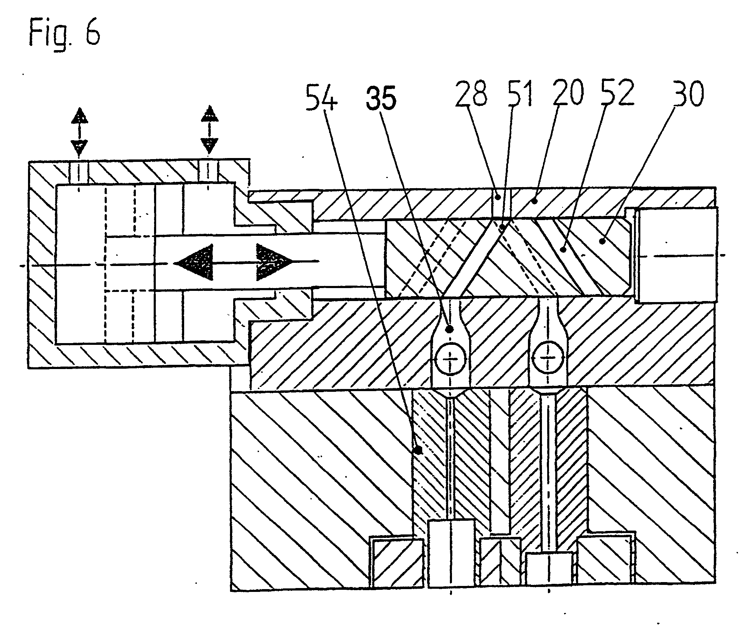

Alternativ dazu kann der Schmelzeverteiler als Schieber ausgebildet sein und die Schmelzeführung zu den verschiedenen Kapillaren durch Verschiebung des Schiebers in axialer Richtung nacheinander geöffnet werden, wobei die Schiebebewegung elektromechanisch, pneumatisch oder hydraulisch eingeleitet wird. Fig. 6 zeigt hier ein Beispiel einer Vorrichtung in welcher die Schmelzweiche 30 als Schieber ausgebildet ist und durch Betätigen eines Zylinders axial verschoben wird, so daß wahlweise die Schmelze durch die Bohrung 51 oder 52 in die danach folgende Druckkammer 35 und daraus in die Kapillare 54 strömt.

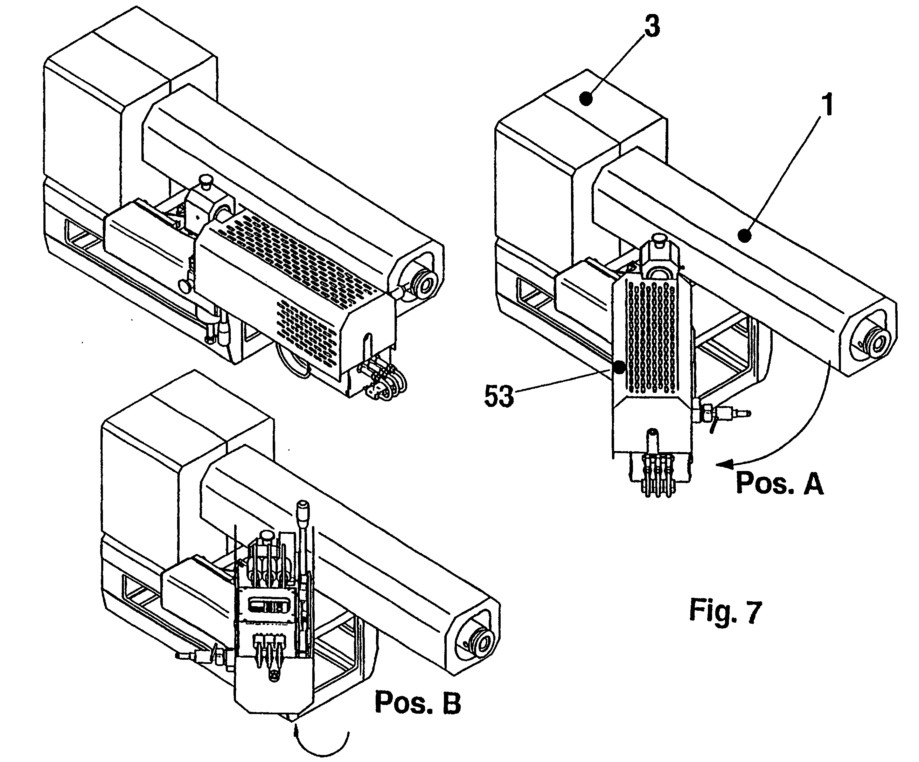

Wie in Fig. 7 in einer perspektivischen Ansicht des Extruders mit Zylinder 1 und Antrieb 3 gezeigt, kann das gesamte Rheometer 53 seitlich schwenkbar (Pos. A) und zusätzlich um eine in der Normalbetriebslage parallel zur Zylinderachse des Extruders verlaufende Achse nach oben schwenkbar ausgeführt sein.

Bevorzugterweise ist die ganze Rheometeranordnung mit Rheometerkörper 20, Schmelzepumpe 25 und Antrieb 43 am Extruderunterbau angebaut und um 15° bis 90° nach einer Seite vom Extruderzylinder weg schwenkbar, und um 90° bis 180° um eine in der Normalbetriebslage parallel zur Zylinderachse des Extruders verlaufende Achse nach oben schwenkbar, so daß nach Lösen eines Adapters vom Extruder ein einfaches Reinigen möglich ist.

Varteilhaft ist es auch, wenn die ganze Rheometeranordnung auf einem eigenen fahrbaren Gestell (nicht gezeigt) aufgebaut ist, und somit nach Lösen des Adapters vom Extruder weggefahren werden kann.

## Patentansprüche

1. Vorrichtung zum Messen der Viskosität plastischer Massen, insbesondere von Polymerschmelzen, nach dem Prinzip der Bestimmung des Druckabfalles beim Fließen der Masse durch eine Kapillare mit definiertem Querschnitt und definierter Länge,
wobei eine regelbare Schmelzepumpe zur Erzeugung eines definierten Schmelzestromes in eine beheizbare Vorrichtung eingebaut ist, und
wobei zur Erfassung eines größeren Bereiches von Fließgeschwindigkeiten mehrere Kapillaren in die Vorrichtung eingebaut sind,
wobei die mehreren Kapillaren unterschiedlicher Abmessungen ortsfest in der Vorrichtung eingebaut sind und wobei jeder Kapillare jeweils ein dem Druckbereich angepaßter Druckmeßaufnehmer zugeschaltet ist,
**dadurch gekennzeichnet,**
**daß** ein während des Messens kontinuierlicher Schmelzefluß von der Schmelzepumpe (13) zu jeweils einer Kapillare durch einen beweglichen Schmelzeverteiler (30) in Form eines zylindrischen Körpers bewerkstelligbar ist, wobei der zylindrische Körper so mit Querkanälen durchbohrt ist, daß nacheinander durch Veränderung der Stellung dieses Schmelzeverteilers (30) jeweils eine der mehreren Kapillaren mit Schmelze beschickbar ist, und
**daß** jeder Kapillare jeweils ein Massedrucksensor (45) - und ein Temperaturmeßaufnehmer (46) zugeschaltet ist.

2. Vorrichtung nach Anspruch 1,
**dadurch gekennzeichnet,**
**daß** die Verstellung des Schmelzeverteilers (30) durch einen Hydraulik- oder Pneumatikzylinder (42) und eine Ratsche (41) erfolgt.

3. Vorrichtung nach Anspruch 1,
**dadurch gekennzeichnet,**
**daß** der Schmelzeverteiler (30) als Schieber ausgebildet ist und durch Verschiebung des Schiebers in axialer Richtung die Schmelzeführung zu den verschiedenen Kapillaren (37 - 39) nacheinander geöffnet wird, wobei die Schiebebewegung elektromechanisch, pneumatisch oder hydraulisch eingeleitet wird.

4. Vorrichtung nach Anspruch 1,
**dadurch gekennzeichnet,**
**daß** der Schmelzeverteiler (30) als rotationssymmetrische Schmelzeweiche ausgebildet und mit mehreren Querkanälen für die Schmelzeführung ausgestattet ist und durch eine Drehbewegung von einer einer der mehreren Kapillaren zugeordneten Position in eine einer nächsten Kapillare zugeordnete Position bringbar ist.

5. Vorrichtung nach Anspruch 4,
**dadurch gekennzeichnet,**
**daß** der Schmelzeverteiler (30) mit drei radial zueinander angeordneten Querkanälen für die Schmelzeführung ausgestattet ist; und
**daß** die Bohrungen jeweils um 60° in Drehrichtung versetzt sind und somit durch eine Drehbewegung des Schmelzeverteilers (30) um eine Drehachse um 60° jeweils die nächste der drei Kapillaren mit Schmelze beschickbar ist.

6. Vorrichtung nach Anspruch 4,
**dadurch gekennzeichnet,**
**daß** der Schmelzeverteiler (30) mit vier radial zueinander angeordneten Querkanälen für die Schmelzeführung ausgestattet ist;
**daß** die Bohrungen jeweils um 45° in Drehrichtung versetzt sind und somit durch eine Drehbewegung des Schmelzeverteilers (30) um eine Drehachse um 45° jeweils die nächste der vier Kapillaren mit Schmelze beschickbar ist.

7. Vorrichtung nach einem der Ansprüche 4 bis 6,
**dadurch gekennzeichnet,**
**daß** der Antrieb der Drehbewegung des Schmelzeverteilers (30) über einen Servomotor mit Schrittschaltung erfolgt, so daß die Drehbewegung jeweils in gleicher Richtung weitergeht.

8. Vorrichtung nach Anspruch 4,
**dadurch gekennzeichnet,**
**daß** nur zwei Kapillaren vorgesehen sind und die Drehbewegung zum Drehen des Schmelzeverteilers (30) jeweils mit Hilfe eines Hydraulik- oder Pneumatikzylinders (42) oder eines elektrischen oder magnetischen Antriebs erfolgt, wobei der Schmelzeverteiler (30) von einer Position in die andere Position hin- und wieder zurückdrehbar ist.

9. Vorrichtung nach einem der Ansprüche 7 oder 8,
**dadurch gekennzeichnet,**
**daß** die Vorrichtung mit einem Rheometerkörper (20), der Schmelzepumpe (25) und dem Antrieb (43) an einem Extruderunterbau angebaut ist und um 15° bis 90° nach einer Seite von einem Extruderzylinder weg schwenkbar, und um 90° bis 180° um eine in der Normalbetriebslage parallel zur Achse des Zylinders (1) des Extruders verlaufende Achse hochschwenkbar ist, so daß nach Lösung eines Adapters (4) vom Extruder ein einfaches Reinigen möglich ist.

10. Vorrichtung nach Anspruch 9,
**dadurch gekennzeichnet,**
**daß** die ganze Rheometeranordnung (53) auf einem eigenen fahrbaren Gestell aufgebaut ist und nach Lösen eines Adapters (4) vom Extruder wegfahrbar ist.

11. Verfahren zum Messen der Viskosität plastischer Massen, insbesondere von Polymerschmelzen, nach dem Prinzip der Bestimmung des Druckabfalles beim Fließen der Masse durch eine Kapillare mit definiertem Querschnitt und definierter Länge zum Einsatz im Labor, wie vor allem auch für Messungen im Betrieb, insbesondere bei der integrierten Qualitätskontrolle,
wobei ein wohldefinierter Schmelzvolumenstrom in einer Umgebung mit wohldefinierter Temperatur bereitgestellt wird, und
wobei zur Erfassung eines größeren Bereiches von Fließgeschwindigkeiten mehrere Kapillaren bereitgestellt werden,
wobei mehrere ortsfeste Kapillaren (37 - 39) unterschiedlicher Abmessungen vorgesehen sind, wobei in jeder Kapillare jeweils Meßwerte für den Druck ermittelt werden,
**dadurch gekennzeichnet,**
**daß** der wohldefinierte Schmelzvolumenstrom unter Verwendung eines beweglichen Schmelzeverteilers (30) in Form eines zylindrischen und mit Querkanälen durchbohrten Körpers zu jeweils einer Kapillare geführt wird, so daß nacheinander durch Veränderung der Stellung des Schmelzeverteilers (30) jeweils eine der mehreren Kapillaren mit Schmelze beschickt wird und aus den in einer jeden Kapillare ermittelten Meßwerten für Druck und Temperatur sowie dem wohldefinierten Schmelzvolumenstrom die Schmelze charakterisierende Fließkurven errechnet werden.

## Claims

1. An apparatus for measuring the viscosity of plastic compositions, particularly of polymer melts, using the principle of determining the pressure drop of the composition when flowing through a capillary with a defined cross-section and a defined length,
wherein a controllable melt pump for producing a defined melt flow is installed in a heatable device, and
wherein a plurality of capillaries are provided in the apparatus for covering a relatively large range of flow speeds, the plurality of capillaries of different dimensions being stationarily provided in the apparatus and each capillary being connected to a respective pressure sensor matched to the pressure range,
**characterised in that** a continuous melt flow may be effected during measurement by the melt pump (13) to a respective capillary by a movable melt distributor (30) in the form of a cylindrical body, the cylindrical body being traversed by transverse passages so that by altering the position of this melt distributor (30) a respective one of the plurality of capillaries can be supplied with melt and
that each capillary is connected to a respective composition pressure sensor (45) and a temperature sensor (46).

2. An apparatus as claimed in Claim 1, **characterised in that** the movement of the melt distributor (30) is effected by means of a hydraulic or pneumatic cylinder (42) and a ratchet device (41).

3. An apparatus as claimed in Claim 1, **characterised in that** the melt distributor (30) is constructed in the form of a gate valve and, by moving the gate valve in the axial direction, the melt paths to the different capillaries (37-39) are opened successively, whereby the sliding movement is initiated electromechanically, pneumatically or hydraulically.

4. An apparatus as claimed in Claim 1, **characterised in that** the melt distributor (30) is in the form of a rotationally symmetrical melt diverter and is equipped with a plurality of transverse passages for the melt flow and is movable by rotation from one position associated with one of the plurality of capillaries into a position associated with the next capillary.

5. An apparatus as claimed in Claim 4, **characterised in that** the melt distributor (30) is equipped with three transverse passages, disposed radially with respect to one another, for conducting the melt; and
that the bores are offset in the direction of rotation by 60° and the next of the three capillaries may thus be supplied with melt by rotary movement of the melt distributor (30) about a rotary axis through 60°.

6. An apparatus as claimed in Claim 4, **characterised in that** the melt distributor is equipped with four transverse passages for conducting the melt arranged radially with respect to one another;
that the bores are offset by 45° in the direction of rotation and the next of the four capillaries may thus be supplied with melt by rotation of the melt distributor (30) about a rotary axis through 45°.

7. An apparatus as claimed in one of Claims 4 to 6, **characterised in that** the drive for the rotation of the melt distributor (30) is effected by means of a servomotor with step control so that the rotation always proceeds in the same direction.

8. An apparatus as claimed in Claim 4, **characterised in that** only two capillaries are provided and the rotary movement for rotating the melt distributor (30) is effected with the aid of a hydraulic or pneumatic cylinder (42) or an electric or magnetic actuator, whereby the melt distributor (30) is rotatable back and forth from one position into the other position.

9. An apparatus as claimed in one of Claims 7 or 8, **characterised in that** the apparatus is attached with a rheometer body (20), the melt pump (25) and the drive (43) to an extruder support and is pivotable through 15° to 90° to one side away from an extruder cylinder and is pivotable upwardly through 90° to 180° about an axis extending parallel to the axis of the cylinder (1) of the extruder, in the normal operational position, so that simple cleaning is possible after releasing an adapter (4) from the extruder.

10. An apparatus as claimed in Claim 9, **characterised in that** the entire rheometer arrangement (53) is mounted on an individual movable stand and may be moved away after release of an adapter (4) from the extruder.

11. A method of measuring the viscosity of plastic compositions, particularly of polymer melts, using the principle of determining the pressure drop of the composition when flowing through a capillary with a defined cross-section and a defined length for use in a laboratory, such as particularly for measurements in a factory, particularly with integrated quality control,
wherein a predetermined melt volume flow is provided in an environment with a predetermined temperature, and
wherein a plurality of capillaries are provided for covering a relatively large range of flow speeds, wherein a plurality of stationary capillaries (37-39) of different dimensions are provided, measured values for the pressure being determined in each capillary,
**characterised in that** the predetermined melt volume flow is directed by using a movable melt distributor (30), in the form of a cylindrical body through which transverse passages are bored, to one of the capillaries so that, by changing the position of the melt distributor (30), successive ones of the plurality of capillaries are supplied with melt and flow curves characterising the melt are calculated from the measured values, determined in each of the capillaries, for pressure and temperature and the predetermined melt volume flow.

## Revendications

1. Dispositif pour mesurer la viscosité de masses plastiques, en particulier de masses de polymères fondus, selon le principe de la détermination de la chute de pression lors de l'écoulement de la masse par un capillaire possédant une section définie et une longueur définie,
dans lequel une pompe à masse fondue réglable est installée pour générer un écoulement défini de masse fondue dans un dispositif pouvant être chauffé, et
dans lequel, pour capter une plus grande gamme de vitesses d'écoulement, plusieurs capillaires sont installés dans le dispositif,
dans lequel les différents capillaires de différentes dimensions sont installés dans des emplacements fixes du dispositif et dans lequel un capteur de pression adapté à la gamme de pressions est respectivement coordonné à chaque capillaire,
**caractérisé en ce qu'**un écoulement de masse fondue continu pendant la mesure peut être exécuté depuis la pompe à masse fondue (13) vers respectivement un capillaire par un répartiteur de masse fondue mobile (30) sous la forme d'un corps cylindrique, où le corps cylindrique est percé de canaux transversaux de façon telle que chacun des différents capillaires peut respectivement être chargé à la suite en masse fondue par une modification de la position du répartiteur de matière fondue (30), et
**en ce qu'**à chaque capillaire sont respectivement coordonnés un capteur de pression de la matière (45) et un capteur de température (46).

2. Dispositif selon la revendication 1,
**caractérisé en ce que** le réglage du répartiteur de masse fondue (30) se fait par un vérin hydraulique ou pneumatique (42) et un cliquet (41).

3. Dispositif selon la revendication 1,
**caractérisé en ce que** le répartiteur de masse fondue (30) est conçu en tant que coulisseau et, par un déplacement du coulisseau dans la direction axiale, ouvre l'alimentation en masse fondue vers les différents capillaires (37-39) l'un après l'autre, le déplacement de coulissement étant initié par voie électromécanique, pneumatique ou hydraulique.

4. Dispositif selon la revendication 1,
**caractérisé en ce que** le répartiteur de masse fondue (30), conçu en tant que dispositif de séparation de masse fondue à symétrie de révolution, est équipé de plusieurs canaux transversaux pour l'alimentation en ou le guidage de la masse fondue, et peut être amené, par un mouvement de pivotement, depuis une position coordonnée à un des différents capillaires vers une position coordonnée à un capillaire suivant.

5. Dispositif selon la revendication 4,
**caractérisé en ce que** le répartiteur de masse fondue (30) est équipé de trois canaux transversaux disposés radialement les uns par rapport aux autres pour le guidage de la masse fondue ; et
**en ce que** les perçages sont décalés respectivement de 60° dans le sens de rotation, et le capillaire suivant parmi les trois capillaires peut être alimenté en masse fondue, respectivement par un mouvement de rotation de 60° du répartiteur de masse fondue (30) autour d'un axe de rotation.

6. Dispositif selon la revendication 4,
**caractérisé en ce que** le répartiteur de masse fondue (30) est équipé de quatre canaux transversaux disposés radialement les uns par rapport aux autres, pour l'alimentation en ou le guidage de la masse fondue ;
**en ce que** les perçages sont respectivement décalés de 45° et que par conséquent, par un mouvement de pivotement de 45° du répartiteur de masse fondue (30) autour d'un axe de rotation, le capillaire suivant parmi les quatre capillaires peut être alimenté en masse fondue.

7. Dispositif selon l'une des revendications 4 à 6,
**caractérisé en ce que** l'entraînement du mouvement de rotation du répartiteur de masse fondue (30) se fait par un servomoteur avec un entraînement intermittent, si bien que le mouvement de rotation se poursuit respectivement dans la même direction.

8. Dispositif selon la revendication 4,
**caractérisé en ce que** seuls deux capillaires sont prévus et **en ce que** le mouvement de rotation permettant de faire pivoter le répartiteur de masse fondue (30) se fait respectivement à l'aide d'un vérin hydraulique ou pneumatique (42) ou d'un entraînement électrique ou magnétique, le répartiteur de masse fondue (30) pouvant être amené rotativement d'une position vers l'autre, et vice-versa.

9. Dispositif selon l'une des revendications 7 ou 8,
**caractérisé en ce que** le dispositif est monté, avec un corps de rhéomètre (20), la pompe à masse fondue (25) et l'entraînement (43) au niveau d'une structure d'extrudeuse, et peut pivoter pour s'éloigner de 15 à 90° vers un côté d'un cylindre d'extrudeuse, et peut pivoter vers le haut de 90 à 180 ° autour d'un axe s'étendant dans la position d'exploitation normale parallèlement à l'axe du cylindre (1) de l'extrudeuse, de sorte qu'après libération d'un adaptateur (4) de l'extrudeuse, un nettoyage simple est possible.

10. Dispositif selon la revendication 9,
**caractérisé en ce que** tout l'ensemble du dispositif à rhéomètre (53) est monté sur un châssis propre mobile et peut être retiré de l'extrudeuse après libération d'un adaptateur (4).

11. Procédé de mesure de la viscosité de masses plastiques, en particulier de masses de polymères fondus, selon le principe de la détermination de la chute de pression lors de l'écoulement de la masse fondue par un capillaire présentant une section définie et une longueur définie, à utiliser dans un laboratoire, comme essentiellement aussi pour des mesures en exploitation, en particulier lors du contrôle qualité intégré,
dans lequel un écoulement volumétrique de masse fondue bien défini est mis à disposition dans un environnement à une température définie, et
dans lequel, pour capter une plus grande gamme de vitesses d'écoulement, plusieurs capillaires sont mis à disposition,
où plusieurs capillaires fixes (37-39) de différentes dimensions sont prévus, et où dans chaque capillaire, des valeurs de mesure de pression sont respectivement enregistrées,
**caractérisé en ce que** l'écoulement volumétrique de masse fondue bien défini est amené, en utilisant un répartiteur de masse fondue (30) mobile sous la forme d'un corps cylindrique et traversé de canaux transversaux, vers chaque capillaire respectif, si bien que l'un après l'autre, par modification de la position du répartiteur de masse fondue (30), un de plusieurs capillaires est alimenté en matière fondue l'un après l'autre, puis on calcule, à partir des valeurs de mesure de pression et de température enregistrées dans chaque capillaire, de même que de l'écoulement volumétrique de masse fondue bien défini, les courbes d'écoulement caractérisant la masse fondue.
